# EUROPÄISCHE PATENTANMELDUNG

(11) **EP 0 561 029 A1**
(43) Veröffentlichungstag der Anmeldung: **22.09.1993**
(21) Anmeldenummer: 92104867.4
(22) Anmeldetag: 20.03.1992
(51) Int. Cl.: B01D 53/26, B01D 53/04

(54) **Verfahren und Vorrichtung zur diskontinuierlichen Trocknung von Luft**

(71) Anmelder: FREY-AUFBEREITUNGSTECHNIK GmbH, D-22844 Norderstedt (DE)
(72) Erfinder: Frey, Franz, W-2000 Norderstedt (DE)
(74) Vertreter: Fleck, Thomas, Dr. Dipl.-Chem.

(57) **Zusammenfassung**

Die Erfindung betrifft ein Verfahren zur diskontinuierlichen Trocknung druckloser oder druckbeaufschlagter, feuchter Luft und Vorrichtung zur Durchführung dieses Verfahrens. Im Stand der Technik brachte entweder der hohe apparative Aufwand oder der unzureichende Wirkungsgrad der Sättigung des Trockenmittels Probleme mit sich. Die Erfindung schafft hier Abhilfe dadurch, daß man die Sättigung des Trockenmittels während der Adsorption aufgrund der freiwerdenden Adsorptionswärme überwacht, indem die Temperaturdifferenz der vor der Einlaß- und hinter der Auslaßöffnung gemessenen Temperaturen ermittelt wird, und daß bei Erreichen einer Temperaturdifferenz von kleiner etwa 5 - 10°C die Adsorptionsphase beendet und die Desorptionsphase eingeleitet wird.

## Beschreibung

Die Erfindung betrifft ein Verfahren zur diskontinuierlichen Trocknung druckloser oder druckbeaufschlagter, feuchter Luft nach dem Oberbegriff des Anspruchs 1, sowie eine entsprechende Vorrichtung zur Durchführung des Verfahrens.

Ein derartiges Verfahren und eine entsprechende Vorrichtung sind aus der DE-OS 34 23 561 bekannt. Diese ist jedoch bezüglich Ihrer Benutzung auf feuchtwarme Räume, wie z.B. Schwimmhallen und dergleichen, abgestellt und trifft deshalb besondere Vorkehrungen in Form von Kühlrohren zur Kühlung des Trockenmittels mit Umgebungsluft während des Trocknungsvorgangs. Außerdem wird zur Wärmedämmung eine über den Behälter gestülpte Glocke eingesetzt. Die Trocknungsphase wird nach der vorstehenden Lehre solange durchgeführt, bis das Trockenmittel mit Feuchtigkeit gesättigt ist. Ein vorher einzustellender Timer betätigt dann ein elektromagnetisches Drei-Wege-Ventil, um die feuchte Luft einem weiteren Behälter zuzuführen, der schon regeneriertes Trockenmittel enthält. Im Fall von Störungen wird mit einem sichtbaren Farbindikator gearbeitet. Diese bekannte Vorrichtung ist in mehrfacher Hinsicht nachteilig. Der Timer muß nämlich vorher manuell eingestellt werden, wozu Versuche durchzuführen sind. Insbesondere bei wechselnden Feuchtigkeitsbedingungen kann ein optimaler Sättigungsgrad nicht erzielt werden. Darüberhinaus erfordern Kühlrohre, Glocke und die damit zusammenhängenden Teile, einen hohen apparativen Aufwand, der wiederum wartungsanfällig ist.

Im Stand der Technik arbeiten deshalb die handelsüblichen Lufttrockner auf kontiunierliche Weise und setzen hierzu bewegliche Trocknungskammern ein. Hierbei wird jedoch nur ein Wirkungsgrad der Sättigung des Trockenmittels von maximal 40% erzielt, was zu wünschen übrig läßt.

Der vorliegenden Erfindung liegt deshalb die Aufgabe zugrunde, das eingangs genannte Verfahren derart zu verbessern, daß es die oben geschilderten Nachteile beseitigt und mit einer möglichst einfach aufgebauten Vorrichtung einen möglichst optimalen Sättigungswirkungsgrad des Trockenmittels unter unterschiedlichsten Bedingungen und Feuchtigkeitsbelastungen zu ermöglichen, so daß durch eine im Verhältnis zur Regenerationszeit verlängerte Trocknungszeit, Energieverluste vermieden werden und eine kostengünstige Struktur erzielt wird.

Diese Aufgabe wird durch das im Anspruch 1 gekennzeichnete Verfahren bzw. die im Anspruch 4 gekennzeichnete Vorrichtung gelöst.

Erfindungsgemäß überwacht man die Sättigung des Trockenmittels automatisch anhand der bei der Adsorption der Feuchtigkeit am Trockenmittel freiwerdenden Adsorptionswärme. Diese bewirkt nämlich einen Temperaturanstieg, wenn man die Temperaturmessung an der Auslaßöffnung mit der an der Einlaßöffnung vergleicht, bzw. die Temperaturdifferenz ermittelt. Fällt letztere unter einem Wert im Bereich von etwa 5 bis 10° C ab, ist das Trockenmittel im Prinzip vollständig gesättigt und die Adsorption beendet, so daß dann auf Desorption umgeschaltet werden kann. Hierzu setzt man eine Steuereinheit ein.

Es dürfte einleuchten, daß eine Parallelschaltung zweier oder mehrerer erfindungsgemäßer Vorrichtungen, um eine kontinuierliche Lufttrocknung zu erreichen, immer noch wirtschaftlich ist, da die Herstellungskosten der erfindungsgemäßen Vorrichtung aufgrund ihres einfachen Aufbaus wesentlich geringer sind als die vergleichbaren handelsüblichen Geräte. Auch ist es für den Fachmann verständlich, daß die Angabe einer annähernd vollständigen Sättigung einen Trocknungswirkungsgrad von über 60% und insbesondere über 70% umfaßt.

Darüberhinaus paßt sich das erfindungsgemäße Verfahren auch hervorragend an die unterschiedlichen Witterungs- und Feuchtigkeitsverhältnisse in den verschiedenen Jahreszeiten an, ohne daß hierfür besondere Vorkehrungen oder Einstellungsmaßnahmen getroffen werden müssen. So stellt sich beispielsweise eine längere Trocknungsphase in feuchtigkeitsarmen Wintermonaten automatisch ein, ohne daß hierzu manuell eingegriffen werden muß.

Weitere Vorteile und Merkmale gehen aus den Unteransprüchen hervor, die auch gemeinsam mit dem Hauptanspruch von erfinderischer Bedeutung sein können.

Im folgenden wird ein bevorzugtes Beispiel zum besseren Verständnis der Erfindung anhand der Zeichnung näher erläutert.

Es zeigt:
- Fig. 1: eine schematische Querschnittsansicht durch die erfindungsgemäße Vorrichtung; und
- Fig. 2: eine Taupunktkurve.

### Regenerationsphase:

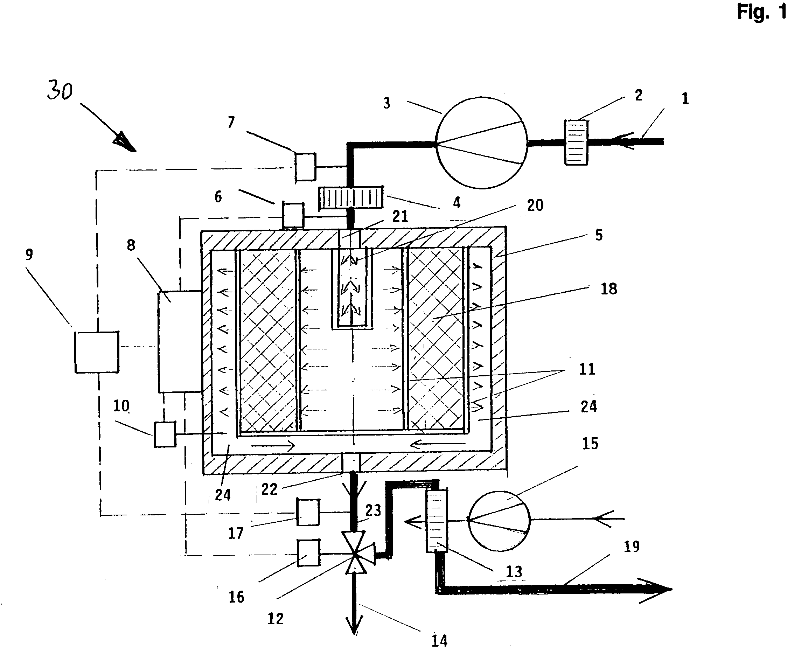

In Fig. 1 ist die erfindungsgemäße Vorrichtung allgemein mit 30 bezeichnet. Durch eine Leitung 1 erfolgt der Eintritt der nassen bzw. feuchten Luft über einen Staubfilter 2 und Ventilator 3. In Nähe der Einlaßöffnung 21 des Gehäuses 5 ist ein Heizkörper 4 angeordnet, der die feuchte Luft auf die gewünschte Temperatur aufheizt. Vor dem Heizkörper 4 ist in der Leitung 1 ein Temperaturfühler 7 angeordnet, während zwischen Einlaßöffnung 21 und dem Heizkörper 4 ein Thermostat 6 für die Kühlungsphase angeordnet ist. Die feuchte, vorgewärmte Luft tritt dann durch die Einlaßöffnung 21 in das Innere des Gehäuses 5 ein, wobei unmittelbar angrenzend an diese Einlaßöffnung 21 ein üblicher Luftverteiler 20 angeordnet ist, der durch ein perforiertes Rohr gebildet wird, das sich etwa über ein Drittel der Gesamtlänge des Gehäuses 5 erstreckt. Hierdurch wird eine gleichmäßig gute Temperaturverteilung im Trockenmittel 18 erzielt. Das Trockenmittel 18 bzw. das Adsorberbett für das in der feuchten Luft enthaltene Wasser, ist in konzentrischen Zylinderrohren eingelagert, die eine Kammer mit perforierter Innen- und Außenwand 11 bilden. Wie durch die Pfeile angedeutet, strömt die Luft im wesentlichen waagerecht durch das Trockenmittel 18 hindurch, und zwar in einen Kanal 24 hinein, der an die Außenwand des Gehäuses 5 angrenzt und zu einer der Einlaßöffnung 21 gegenüberliegenden Auslaßöffnung 22 führt.

Der Kanal 24 wird dabei durch die Gehäusewand einerseits und die Außenwand 11 der Kammer gebildet. Es dürfte einleuchten, daß die das Trockenmittel 18 enthaltende Kammer nur eine geringe Tiefe aufweist, so daß das Trockenmittel auf kurzem Wege in waagerechter Richtung von der Luft durchströmt wird, wodurch die Auskondensierung der Regenerationsluft minimiert wird. Die Austrittsöffnung 22 ist über eine Leitung 23 mit einem Dreiwegeventil 12 verbunden, welches einerseits mit der Leitung 14 für die Regenerationsluft bzw. andererseits mit der Austrittsleitung 19 für die Trockenluft verbindbar ist, wobei letztere einen Luftkühler 13 mit Kühlluftventilator 15 aufweist.
Während die Eintrittsleitung 1 vor der Einlaßöffnung 21 einen Temperaturfühler 7 aufweist, ist hinter der Auslaßöffnung 22 in der Leitung 23 ein Temperaturfühler 17 angeordnet, die beide mit dem Differenztemperaturregler 9 verbunden sind und eben die Temperaturdifferenz der Luft zwischen Eingang und Ausgang messen. Der Differenztemperaturregler 9 ist mit der Steuereinheit 8 verbunden, die ihrerseits einerseits mit dem Thermostaten 6 für die Kühlungsphase und andererseits mit dem Thermostaten 10 für die Aufheizphase verbunden ist, wobei letzterer im Kanal 24 des Gehäuses 5 angeordnet ist.

Darüberhinaus ist ein Motor 16 zum Antrieb des Dreiwegeventils 12 vorgesehen, der ebenfalls mit der Steuereinheit 8 verbunden ist.

### Trocknungsphase:

Wenn nun die Temperaturfühler 7 und 17 Temperaturen ermitteln, die weniger als 10° C voneinander abweichen, so wird dieses von dem Temperaturdifferenzregler 9 an die Steuereinheit 8 gemeldet, die dann den Adsorptionsvorgang beendet, da das Trockenmittel ausreichend gesättigt ist. Es wird dann das Dreiwegeventil 12 von seiner Verbindung mit der Austrittsleitung 19 für die Trockenluft getrennt und mit der Leitung 14 für die Regenerationsluft verbunden. Gleichzeitig bewirkt die Steuereinheit 8, daß auf Desorption umgeschaltet wird, d.h. das Trockenmittel 18 wird über den Thermostaten 10 für die Aufheizphase auf ca. 140° C gehalten.

In der Trocknungsphase wird die vom Ventilator 3 über den Staubfilter 1 angesaugte feuchte Hauptluftmenge über den Heizkörper 4 und den Luftverteiler 20 in das Gehäuse 5 hineingeführt. Die Luft wird horizontal durch das Trockenmittelbett 18 geführt und verläßt schließlich über das Dreiwegeventil 12 und die Austrittsleitung 19 die erfindungsgemäße Vorrichtung. Der Differenztemperaturregler 9 zusammen mit der Steuereinheit 8 überwacht die Trocknungsphase und schaltet die erfindungsgemäße Vorrichtung dann auf die Regenerationsphase um, in der die Aufheizung des Trockenmittelbettes 18 mit dem Heizkörper 4 erfolgt und über den Thermostaten 10 geregelt wird. Die aufgeheizte feuchte Luft verläßt die erfindungsgemäße Vorrichtung über das Dreiwegeventil 12 und die Regenerationsleitung 14. Die Kühlphase wird dann durch den Thermostaten 10 bei erreichter Regenerationstemperatur eingeleitet. Mit dem Thermostaten 6 wird sichergestellt, daß eine vorgegebene Minimumtemperatur nicht unterschritten wird, um eine Vorbeladung mit Wasserdampf der Kühlphase zu verhindern. Über ein Zeitrelais in der Steuereinheit 8 erfolgt dann die Beendigung der Regenerationsphase.

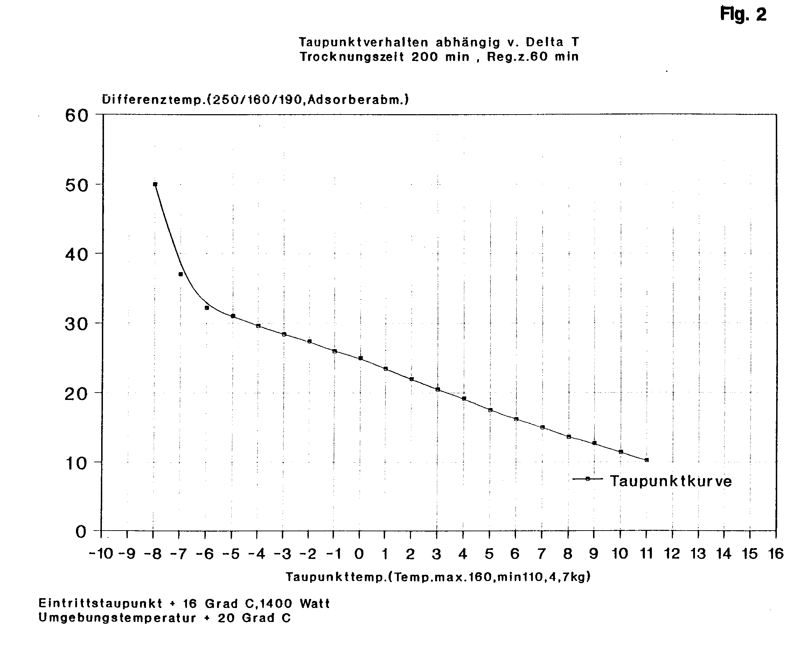

In Fig. 2 ist eine Taupunktkurve anhand einiger Meßpunkte dargestellt. Der Taupunkt ist die Temperatur, bei der bei fortschreitender Abkühlung die Sättigung der Luft mit Wasserdampf gerade erreicht ist (Sättigungstemperatur) und eine relative Feuchtigkeit von 100% herrscht. Wird die Luftmasse unter den Taupunkt abgekühlt, so tritt Kondensation ein. Die Fig. 2 zeigt nun auf der Ordinate, Werte zwischen 0 und 60° C, während auf der Abszisse die Taupunkttemperatur von -10 bis +16° C angegeben wird. Die ermittelte Kurve zeigt nun die Entfeuchtungsleistung der erfindungsgemäßen Vorrichtung in Abhängigkeit der Adsorbereintrittstemperatur und Adsorberaustrittstemperatur (Delta T). Der Feuchtigkeitsgehalt der Ansaugluft beträgt bei dieser Betrachtung konstant 78 % r.F. bei 20°C oder 16°C Taupunkt.

Auf der X-Achse ist die Taupunkttemperatur (°C) der getrockneten Luft aufgetragen, die Y-Achse zeigt die Differenztemperatur Delta T (°C). Bei 50° C (Y-Achse ) entnimmt man aus dem Diagramm 1 einen Taupunkt von -8°C (X-Achse). Mit fallendem Delta T nimmt der Taupunkt der getrockneten Luft ab. Bei erreichtem Taupunkt +11°C wird in diesem Beispiel die Regenerationsphase eingeleitet.

## Patentansprüche

1. Verfahren zur diskontiuierlichen Trocknung druckloser oder druckbeaufschlagter, feuchter Luft, mit einem Gehäuse, das Einlaß- und Auslaßöffnungen für die Luft aufweist und ein die Feuchtigkeit adsorbierendes Trockenmittel wie Silicagel, Aluminiumoxid, Molekularsieb, oder dergleichen, in einer Kammer mit perforierten Wänden besitzt, durch die die Luft hindurchgeführt wird, bis das Trockenmittel annähernd vollständig gesättigt, bevor es danach regeneriert wird,
dadurch gekennzeichnet, daß man die Sättigung des Trockenmittels während der Adsorption aufgrund der freiwerdenden Adsorptionswärme überwacht, indem die Temperaturdifferenz der vor der Einlaß- und hinter der Auslaßöffnung gemessenen Temperaturen ermittelt wird, und daß bei Erreichen einer Temperaturdifferenz von kleiner etwa 5 - 10°C die Adsorptionsphase beendet und die Desorptionsphase eingeleitet wird.

2. Verfahren nach Anspruch 1, dadurch gekennzeichnet, daß die Regeneration aus einer Aufheizungs- und Kühlungsphase besteht, bei der das Trockenmittel zur Desorption zunächst auf ca. 140°C erwärmt, die aufgeheizte feuchte Luft aus dem Gehäuse geführt, und anschließend mit Luft von ca. 55°C das Trockenmittel bis auf ca. 60 - 70°C abgekühlt wird, so daß dann erneut adsorbiert werden kann.

3. Verfahren nach Anspruch 1 und 2, dadurch gekennzeichnet, daß die Temperatur während der Adsorption und Regeneration durch einen vor der Einlaßöffnung angeordneten Thermostaten (6) bzw. einen im Gehäuse angeordneten Thermostaten (10) gesteuert wird.

4. Vorrichtung zur Durchführung des Verfahrens nach einem oder mehreren der vorstehenden Ansprüche 1 bis 3, gekennzeichnet durch ein Gehäuse (5) mit Ein- und Auslaßöffnung (21,22) für die zu trocknende Luft und einer das Trockenmittel (18) aufnehmenden feststehenden, zylindrischen Kammer mit perforierter Innen- und Außenwand (11), einer Ansaugleitung (1) mit Temperaturfühler (7), Heizkörper (4) und Thermostat (6), sowie einer Austrittsleitung (23) mit Temperaturfühler (17) und einem Dreiwegeventil (12), bei der die Temperaturfühler (7,17) über einen Differenztemperaturregler (9) mit einer Steuereinheit (8) verbunden sind, die ihrerseits mit dem Thermostaten (6) für die Kühlphase und einem im Kanal (24) des Gehäuses (5) angeordneten Thermostaten (10) für die Aufheizphase und einem Motor (16) für das Dreiwegeventil (12) verbunden ist, welches die Austrittsleitung (23) mit der Leitung (14) für die Regenerationsluft oder mit der Austrittsleitung (19) für die Trockenluft verbindet.

5. Vorrichtung nach Anspruch 4, dadurch gekennzeichnet, daß in der Ansaugleitung (1) ein Staubfilter (2) und ein Ventilator (3) angeordnet sind.

6. Vorrichtung nach Anspruch 4 und 5, dadurch gekennzeichnet, daß angrenzend an die Einlaßöffnung (21) ein Luftverteiler (20) vorgesehen ist.

7. Vorrichtung nach Anspruch 6, dadurch gekennzeichnet, daß der Luftverteiler (20) durch ein perforiertes Rohr gebildet wird, das sich etwa über 1/3 der Gesamtlänge des Gehäuses (5) erstreckt, um eine gleichmäßige Temperaturverteilung im Trockenmittel zu erzielen.

8. Vorrichtung nach Anspruch 4 bis 7, dadurch gekennzeichnet, daß in der Austrittsleitung (19) für die Trockenluft ein Luftkühler (13) und ein Kühlluftventilator (15) vorgesehen sind.

9. Vorrichtung nach Anspruch 4, dadurch gekennzeichnet, daß die Kammer mit geringer Tiefe ausgebildet ist, so daß das Trockenmittel auf kurzem Weg in waagerechter Richtung von der Luft bei minimierter Auskondensierung der Regenerationsluft durchströmt wird.

10. Verwendung von drei parallel geschalteten Vorrichtungen nach einem oder mehreren der vorstehenden Ansprüche 4 bis 9, von denen sich jeweils eine im Trocknungs-, Kühlungs- bzw. Heizungszustand befindet.
